Europäisches Patentamt

European Patent Office

Office européen des brevets

(19)

(11) Numéro de publication : **0 314 673 B1**

(12) **FASCICULE DE BREVET EUROPEEN**

(45) Date de publication du fascicule du brevet :
28.08.91 Bulletin 91/35

(51) Int. Cl.⁵ : **B65D 25/36, B29C 51/16**

(21) Numéro de dépôt : 87902563.3

(22) Date de dépôt : 04.05.87

(86) Numéro de dépôt international :
PCT/FR87/00147

(87) Numéro de publication internationale :
WO 88/08815 17.11.88 Gazette 88/25

(54) **COMPLEXE MULTICOUCHE FORMANT DECOR, ESSENTIELLEMENT EN MATIERE THERMOPLASTIQUE THERMORETRACTABLE, POUR EMBALLAGE, PROCEDE DE MISE EN PLACE D'UN TEL COMPLEXE ET EMBALLAGE AINSI OBTENU.**

(43) Date de publication de la demande :
10.05.89 Bulletin 89/19

(45) Mention de la délivrance du brevet :
28.08.91 Bulletin 91/35

(84) Etats contractants désignés :
AT BE CH DE FR GB IT LI LU NL SE

(56) Documents cités :
FR-A- 2 111 898
FR-A- 2 501 397
GB-A- 1 453 540
US-A- 3 292 209
US-A- 3 324 508

(73) Titulaire : **Raymond MORIN, S.A.**
**3 Avenue Poincaré**
**F-57400 Sarrebourg (FR)**

(72) Inventeur : **GERARD, Jean**
**5, rue des Halles**
**F-57400 Sarrebourg (FR)**

(74) Mandataire : **Nuss, Pierre**
**10, rue Jacques Kablé**
**F-67000 Strasbourg (FR)**

# Description

La présente invention concerne un complexe multicouche formant décor pour emballage, notamment de produits alimentaires, dont les parois rigides ou semi-rigides multicouche sont réalisées par thermoformage, la couche extérieure de l'emballage étant en matière thermoplastique et devant être recouverte sur sa face en tout ou partie dudit complexe par thermocollage.

De tels emballages sont généralement fabriqués par des machines de conditionnement du type formage-remplissage-thermoscellage (form-fill-seal). Des feuilles mono ou multicouches thermoplastiques polymères ou copolymères sont thermoformées. Lors de ce thermoformage, qui s'effectue à une température d'environ 150°C, le complexe formant décor adhère sur la face externe des parois extérieures de l'emballage grâce à une enduction. Lorsque les parois rigides ou semi-rigides de l'emballage sont très minces, c'est-à-dire comprises entre 100 et 200 µm, l'emballage se refroidit très rapidement, ne présente pas de retrait, et le papier reste intimement collé aux parois. Ces parois très minces peuvent être monocouche (par exemple en une couche de polystyrène) ou multicouche (par exemple polystyrène/couche barrière/polyéthylène). Le complexe formant décor, quant à lui, peut être constitué soit d'un papier kraft blanchi couché de 90 à 115 g/m², dont la face couchée est destinée à l'impression, l'autre face étant enduite d'un thermofusible (hotmelt) de 10 à 18 g/m² thermocollant sur polystyrène, soit d'un complexe aluminium, par exemple de 7 à 9 µm, complexé à un papier kraft de 80 à 115 g/m², la face aluminium étant destinée à l'impression et le papier kraft étant enduit d'un thermofusible (hotmelt) thermocollant sur polystyrène.

. Actuellement, lorsque les parois de l'emballage sont très minces, le complexe formant décor rigidifie également l'ensemble de l'emballage.

On a alors pensé à réaliser des emballages présentant des parois beaucoup plus épaisses, pouvant aller jusqu'à 700 µm, voire même davantage. Ceci est, par exemple, nécessaire pour les emballages sous forme de barquette destinés à être réchauffés aux fours à micro-ondes et contenant, par exemple, des plats cuisinés ou autres. Les parois doivent être épaisses, de manière à ce que l'emballage conserve une certaine tenue lors de la cuisson. Elles sont normalement multicouches, la couche externe étant en une matière thermoplastique telle que, entre autres, du polypropylène. Or, les parois épaisses multicouches présentent, bien entendu, la particularité de demeurer très longtemps chaudes et de rétrécir au refroidissement.

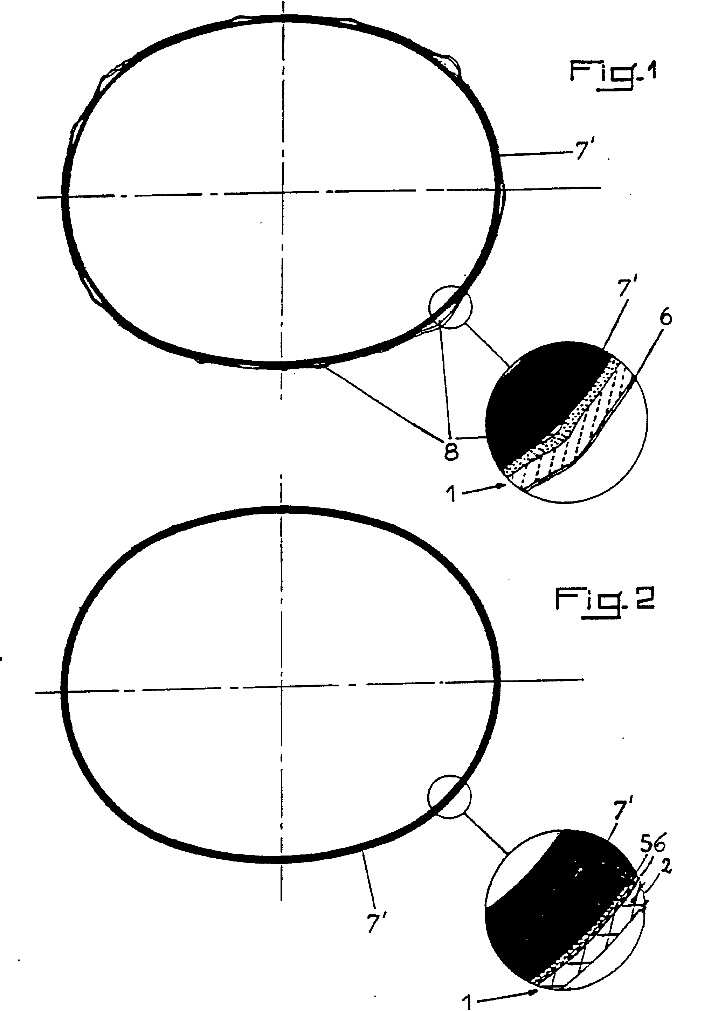

Ainsi, le complexe classique formant décor en papier kraft ou en un complexe aluminium/papier kraft thermoscellé au thermoformage se désolidarise progressivement de l'emballage lors de son refroidissement, que cela soit après le thermoscellage ou après réchauffement de l'emballage, par exemple dans un four à micro-ondes. Cette désolidarisation partielle du complexe entraîne, par conséquent, la formation de cloques au niveau du décor et nuit, bien entendu, à la présentation générale du décor et donc de l'emballage (voir figure 1 des dessins annexés).

En outre, les décors à base de papier kraft ont une très mauvaise résistance à l'humidité et des problèmes de cloquage naissent souvent après stockage en chambre froide, ou après projection d'eau lors du nettoyage.

Enfin, ces décors enduits d'une importante couche de thermofusible (hotmelt) laissent très souvent un dépôt de ce produit sur la machine de conditionnement, ce qui nécessite de fréquents arrêts pour le nettoyage.

L'état connu de la technique est essentiellement compris, d'une part, dans le document FR-A-2501397 ayant pour objet un manchon, principalement constitué par un film de matière synthétique, pour le marquage de récipients, et, d'autre part, dans le document GB-A-1453540 décrivant une boîte métallique pourvue d'une étiquette comportant une couche thermorétractable et un adhésif thermoactif. On connaît également par le document FR-A-2111898 un procédé de fabrication et d'étiquetage simultanés d'un récipient formé à partir d'une feuille de thermoplastique.

Par ailleurs, les documents US-A-3324508 et US-A-3292209 décrivent des appareils permettant d'appliquer des étiquettes, essentiellement constituées par un film flexible et chargées électrostatiquement, sur un contenant, le cas échéant moulé.

Le problème général posé par la présente invention consiste donc à réaliser un complexe formant décor, destiné à être appliqué sur tout ou partie des parois rigides ou semi-rigides épaisses de l'emballage dont la couche externe est en une matière thermoplastique, et qui présente un coefficient de rétraction tel qu'il demeure intimement collé aux parois de l'emballage lors du retrait de ces dernières dû à un refroidissement quelconque, par exemple après thermoformage ou après passage de l'emballage au four, de façon à éviter les cloques au niveau du décor et à améliorer la présentation générale d'ensemble de l'emballage.

En outre, ce complexe doit présenter une bonne résistance à l'humidité et éviter des arrêts fréquents de la machine de conditionnement pour le nettoyage.

L'invention a, en effet, pour objet un complexe multicouche formant décor pour emballage, essentiellement constitué par un film en matière thermoplastique thermorétractable, caractérisé en ce que ledit film thermoplastique thermorétractable est un film transparent dont une face est recouverte de l'impression, elle-même recouverte d'une couche thermocollante sous la forme d'un vernis ou d'une émulsion ou d'une dispersion ou d'un thermofusible de 5 à 6 g/m².

L'invention sera mieux comprise grâce à la description ci-après, qui se rapporte à un mode de réalisation préféré, donné à titre d'exemple non limitatif, et expliqué avec référence aux dessins schématiques annexés, dans lesquels :

la figure 1 est une vue de dessus d'un emballage sous forme de barquette aux parois épaisses après retrait dû au refroidissement, muni d'un complexe selon l'art antérieur ;

la figure 2 est une vue de dessus d'un emballage sous forme de barquette aux parois épaisses après retrait dû au refroidissement, muni d'un complexe selon l'invention ;

la figure 3 est une vue de face de l'emballage sous forme de barquette muni d'un complexe selon l'invention, et

la figure 4 est une vue en coupe, agrandie, d'une variante de réalisation du complexe conforme à l'invention.

Conformément à l'invention, et comme le montre notamment la figure 4 des dessins annexés, le complexe 1 est essentiellement constitué par un film 2 en matière thermoplastique thermorétractable, le film 2 étant un film transparent dont une face 3 est recouverte de l'impression 6, elle-même recouverte d'une couche thermocollante 5 sous la forme d'un vernis ou d'une émulsion ou d'une dispersion ou d'un thermofusible de 5 à 6 g/m².

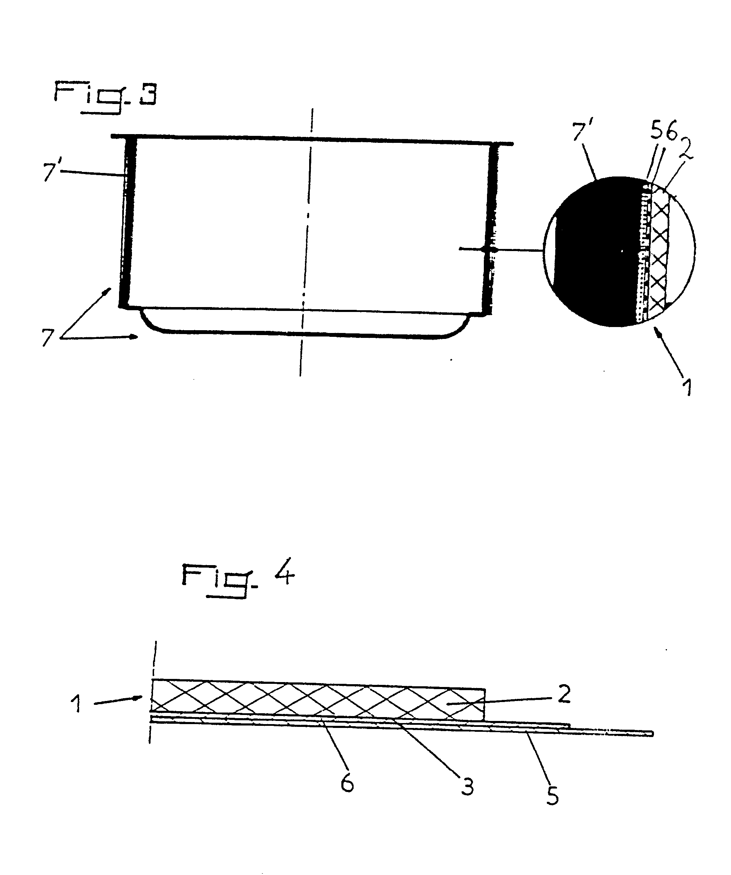

Comme on peut le voir sur les figures 2 et 3, et selon une variante de réalisation de l'invention, le film 2 est un film thermoplastique transparent dont une face 3 est recouverte de l'impression 6 elle-même recouverte d'une couche thermocollante 5 soit d'enduction, soit de polymère extrudé ou coextrudé.

Selon une caractéristique de l'invention, le vernis ou l'émulsion ou la dispersion ou le thermofusible, constituant la couche thermocollante 5, est préférentiellement à base d'éthylvinylacétate.

Quant au film thermoplastique 2 lui-même, il peut être mono ou multicouche, chaque couche pouvant être en un polymère ou un copolymère différent, par exemple, un polystyrène, un polypropylène, un polyester, un polyesterglycole, un PVC, un polyéthylène, etc... Son épaisseur est préférablement comprise entre 40 et 200 μm, en fonction du coefficient de rétraction et de la rigidité de la matière thermoplastique choisie pour ledit film 2. En effet, s'il est moins épais, il risque de se froisser. S'il est plus épais, il se peut qu'il soit difficile à mettre en place lors du formage dans la machine de conditionnement formage-remplissage-thermoscellage.

Bien entendu, ce complexe 1 peut être sous différentes formes. Il pourra, à titre d'exemple, être sous la forme d'une bande ou banderole recouvrant les parois latérales 7' de l'emballage. Le décor imprimé sur ce complexe 1 pourra, par exemple, indiquer la nature du produit, sa marque, sa provenance, sa composition, son poids, des inscriptions poublicitaires, etc...

Un tel complexe 1 permet d'obtenir une excellente tenue à chaud au niveau du collage (hot tack). Comme déjà indiqué précédemment, ceci est nécessaire pour éviter les cloques 8 qui se formeraient inévitablement au moment du refroidissement, notamment après le thermoformage ou après le passage au four (voir figures 1 et 2).

De plus, un tel complexe 1 offre une meilleure protection de l'emballage. Enfin, il permet d'augmenter le rendement des machines de conditionnement du type formage-remplissage-thermoscellage puisqu'il n'est plus nécessaire de les nettoyer aussi souvent pour ôter le dépôt du produit thermofusible (hot melt) dû à la forte proportion de paraffine ou de cire qu'il contient.

La présente invention a également pour objet un procédé de mise en place du complexe 1 conforme à l'invention sur tout ou partie d'un emballage, dont les parois rigides ou semi-rigides multicouche sont réalisées par thermoformage, la couche extérieure de l'emballage étant en matière thermoplastique et devant être recouverte sur sa face externe en tout ou partie dudit complexe par thermocollage, caractérisé en ce qu'il consiste à disposer le complexe 1 à l'intérieur des moules d'une machine de conditionnement du type formage-remplissage-thermoscellage, moules destinés à réaliser le thermoformage des feuilles notamment en matière thermoplastique formant les différentes parois 7 de l'emballage, puis à réaliser le thermoformage, sa température entraînant simultanément le thermocollage de la couche de scellage 5 du complexe 1 sur les parois 7 de l'emballage, le film 2 restant intimement thermocollé auxdites parois 7 de l'emballage lors du retrait de ces dernières au moment du refroidissement après thermoformage car présentant un coefficient de rétraction sensiblement identique à celui de l'emballage.

Enfin, la présente invention a aussi pour objet un emballage, notamment de produits alimentaires, dont tout ou partie des faces externes des parois extérieures rigides ou semi-rigides multicouche sont recouvertes par un complexe 1 multicouche formant décor selon l'invention.

Cet emballage pourra être, comme indiqué précédemment, sous forme d'une barquette dont les parois latérales 7' sont munies du complexe 1 conforme à l'invention sous la forme d'une bande ou banderole.

Bien entendu, l'invention n'est pas limitée au mode de réalisation décrit et représenté aux dessins annexés. Des modifications restent possibles, notamment du point de vue de la constitution des divers éléments, ou par substitution d'équivalents techniques, sans sortir pour autant du domaine de protection de l'invention.

## Revendications

1. Complexe multicouche formant décor pour emballage, essentiellement constitué par un film en matière thermoplastique thermorétractable, caractérisé en ce que ledit film (2) thermoplastique thermorétractable est un film transparent dont une face (3) est recouverte de l'impression (6), elle-même recouverte d'une couche thermocollante (5) sous la forme d'un vernis ou d'une émulsion ou d'une dispersion ou d'un thermofusible de 5 à 6 g/m².

2. Complexe selon la revendication 1, caractérisé en ce que le vernis ou l'émulsion ou la dispersion ou le thermofusible est préférentiellement à base d'éthylvinylacétate.

3. Complexe selon l'une quelconque des revendications 1 et 2, caractérisé en ce que le film thermoplastique (2) lui-même est mono ou multicouche, chaque couche pouvant être en un polymère ou un copolymère différent.

4. Complexe selon l'une quelconque des revendications 1 à 3, caractérisé en ce que l'épaisseur du film (2) est comprise entre 40 et 200 µm, en fonction du coefficient de rétraction et de la rigidité de la matière thermoplastique choisie pour ledit film (2).

5. Complexe selon l'une quelconque des revendications 1 à 4, caractérisé en ce qu'il est sous forme d'une bande ou banderole.

6. Procédé de mise en place du complexe selon l'une quelconque des revendications 1 à 5 sur tout ou partie d'un emballage, dont les parois rigides ou semi-rigides multicouche sont réalisées par thermoformage, la couche extérieure de l'emballage étant en matière thermoplastique et devant être recouverte sur sa face externe en tout ou partie dudit complexe par thermocollage, procédé caractérisé en ce qu'il consiste à disposer le complexe (1) à l'intérieur des moules d'une machine de conditionnement du type formage-remplissage-thermoscellage, moules destinés à réaliser le thermoformage des feuilles notamment en matière thermoplastique formant les différentes parois (7) de l'emballage, puis à réaliser le thermoformage, sa température entraînant simultanément le thermocollage de la couche de scellage (5) du complexe (1) sur les parois (7) de l'emballage, le film (2) restant intimement thermocollé auxdites parois (7) de l'emballage lors du retrait de ces dernières au moment du refroidissement après thermoformage car présentant un coefficient de rétraction sensiblement identique à celui de l'emballage.

7. Emballage dont tout ou partie des faces externes des parois extérieures rigides ou semi-rigides multicouche sont recouvertes par le complexe (1) multicouche formant décor selon l'une quelconque des revendications 1 à 5, et mis en place d'après le procédé selon la revendication 6.

## Claims

1. Multi-layered complex forming a decoration, essentially consisting of a film of thermoretractable thermoplastic material, for packages, characterised in that said thermoretractable thermoplastic film (2) is a transparent film of which one face (3) is covered by the printing (6) which is itself covered by a thermosticking layer (5) in the form of a varnish or an emulsion or a dispersion or a thermofusible material of 5 to 6 g/m².

2. Complex according to claim 1, characterised in that the varnish or the emulsion or the dispersion or the thermofusible material is preferably based on ethylvinylacetate.

3. Complex according to any one of claims 1 and 2, characterised in that the thermoplastic film (2) itself is mono- or multi-layered, and each layer can be of a different polymer or copolymer.

4. Complex according to any one of claims 1 to 3, characterised in that the thickness of the film (2) is between 40 and 200 µm as a function of the coefficient of shrinkage and of the rigidity of the thermoplastic material selected for said film (2).

5. Complex according to any one of claims 1 to 4, characterised in that it is in the form of a band or hoop.

6. Process for positioning the complex according to any one of claims 1 to 5 over all or part of a package of which the rigid or semi-rigid multi-layered walls are produced by thermoforming, the external layer of the package being of thermoplastic material and having to be covered with said complex over all or part of its external face by thermosticking, the process being characterised in that it involves disposing the complex (1) inside the moulds of a packaging machine of the form-fill-thermoseal type, the moulds being intended to bring about the thermoforming of sheets, in particular of thermoplastic material, forming the various walls (7) of the package, then carrying out thermoforming, its temperature simultaneously causing the thermosticking of the sealing layer (5) of the complex (1) on the walls (7) of the package, the film (2) remaining intimately thermally stuck to said walls (7) of the package during the shrinkage of these walls at the moment of cooling after thermoforming as it has a coefficient of shrinkage which is substantially equal to that of the package.

7. Package of which all or part of the external faces of the multi-layered rigid or semi-rigid external walls are covered by the multi-layered complex (1) forming a decoration according to any one of claims 1 to 5, and positioning by the process according to claim 6.

**Patentansprüche**

1. Dekorativer Mehrschichtstoff für Verkpackung, bestehend aus heizschrumpfbarem Kunststoff, dadurch gekennzeichnet, daß dieser heizschrumpfbare Kunststoff (2) aus einem transparenter Kunststoff besteht, dessen eine Seite (3) mit dem Aufdruck (6), dieser selbst mit einer Schicht Thermoklebstoffs (5) in Form eines Lacks oder einer Emulsion oder einer Dispersion oder einer Heizschmelzmasse von 5 bis 6 g/m² überzogen ist.

2. Mehrschichtstoff nach Anspruch 1, dadurch gekennzeichnet, daß der Lack oder die Emulsion oder die Dispersion oder die Heizschmelszmasse vorzugsweise auf Aethylvinylazetat-Basis aufgebaut ist.

3. Mehrschichtstoff nach einem der Ansprüche 1 und 2, dadurch gekennzeichnet, daß der thermoplastische Kunststoff (2) selbst aus einer der zwei Schichten besteht, wobei jede Schicht aus einem Polymer oder einem anderen Copolymer bestehen kann.

4. Mehrschichtstoff nach einem der Ansprüche 1 bis 3, dadurch gekennzeichnet, daß die Dicke des Kunststoffs (2) zwischen 40 und 200 µm, abhängig von dem Schrumpfkoeffizienten und der Steife des für dieser Kunststoff (2) gewählten, thermoplastischen Materials liegt.

5. Mehrschichtstoff nach einem der Ansprüche 1 bis 4, dadurch gekennzeichnet, daß er in Form eines Streifens oder einer Banderole ausgeführt ist.

6. Verfahren zum Aufbringen des Mehrschichtstoffs nach einem der Ansprüche 1 bis 5 auf die gesamte oder einen Teil einer Verpackung, deren steife oder halbsteife mehrschichtige Wandungen durch Warmformung hergestellt werden, wobei die äußere Schicht der Verpackung aus thermoplastischem Material besteht und an der Außenseite mit diesem Mehrschichtstoff insgesamt oder teilweise durch Heißkleben überzogen werden muß, dadurch gekennzeichnet, daß es darin besteht, den Mehrschichtstoff (1) in die Formen einer Verpackungsmaschine vom Typ Formen-Füllen-Heißversiegeln anzuordnen, wobei die Formen dazu dienen, die Warmformung der die verschiedener Wände (7) der Verpackung bildenden Folien insbesondere aus thermoplastischem Material durchzuführen, dann die Warmformung durchzuführen, wobei durch ihre Temperatur gleichzeitig die Heißverklebung der Versiegelungsschicht (5) des Mehrschichtstoffs (1) an den Wänden (7) der Verpackung bewirkt wird, wodurch der Kunststoff (2) mit diesen Wänden (7) der Verpackung während der Schrumpfung dieser letzteren bei der Abkühlung nach der Warmformung innig heißverklebt bleibt, da er einen mit der Verpackung ziemlich identischen Schrumpfungskoeffizienten aufweist.

7. Verpackung, deren Außenseiten der steifen oder halbsteifen, mehrschichtigen Außenwände ganz oder teilweise mit dem dekorativen Mehrschichtstoff (1) überzoger werden, nach einem der Ansprüche 1 bis 5, und Aufbringen gemäß dem Verfahren nach Anspruch 6.

Fig.1

Fig.2

Fig. 3

Fig. 4